# FASCICULE DE BREVET EUROPEEN

(11) **EP 1 703 829 B1**
(45) Date de publication et mention de la délivrance du brevet: **03.09.2008**
(21) Numéro de dépôt: 04816485.9
(22) Date de dépôt: 23.12.2004
(51) Int. Cl.: A47J 43/08

(54) **APPAREIL ELECTROMENAGER DE PREPARATION D ALIMENTS PREVU POUR ETRE MIS EN VEILLE ET POUR ETRE REACTIVE**
FÜR STANDBY- ODER REAKTIONSZUSTAND AUSGEFÜHRTES ELEKTRISCHES HAUSHALTSLEBENSMITTELZUBEREITUNGSGERÄT
ELECTRIC HOUSEHOLD FOOD PREPARATION APPLIANCE WHICH IS DESIGNED TO BE ON STANDBY AND REACTIVE

(30) Priorité: 06.01.2004 FR 0400058
(43) Date de publication de la demande: 27.09.2006
(73) Titulaire: SEB S.A., 69130 Ecully (FR)
(72) Inventeur: GUINET, Michel, 64000 Pau (FR); HERRADA, José, 38200 Vienne (FR)
(74) Mandataire: Kiehl, Hubert
(86) Numéro de dépôt international: PCT/FR2004/003372
(87) Numéro de publication internationale: WO 2005/074772

(56) Documents cités:
- US-A- 3 582 744
- US-A- 3 585 476
- US-A- 3 803 468
- US-A- 4 691 870
- US-A- 5 632 000

## Description

### Domaine technique

L'invention se rattache au domaine de l'électroménager, et plus particulièrement au domaine des appareils électroménagers destinés à la préparation des aliments. Parmi ces appareils figurent notamment les robots culinaires mono ou multifonctions de toutes sortes, et par exemple les mixeurs (également appelés blenders), les batteurs, les hachoirs à viande, les presse-agrumes, les centrifugeuses et autres couteaux électriques.

L'invention concerne plus particulièrement un agencement du dispositif de contrôle et de commande du moteur électrique équipant de tels appareils. Elle vise plus spécifiquement la gestion de la vitesse de ce moteur en fonction de sa charge.

### Techniques antérieures

De manière générale, les robots culinaires sont équipés d'un ou plusieurs moteurs électriques qui peuvent être de type varié, et par exemple des moteurs universels, à courant continu ou "brushless". Ces moteurs sont fréquemment alimentés de telle sorte qu'ils tournent à vitesse variable, pour entraîner un outil rotatif dépendant du type d'appareil.

En fonctionnement, le moteur est alimenté pour fournir un couple suffisant afin d'effectuer les opérations nécessaires. Lorsque le couple résistant appliqué au moteur diminue, du fait par exemple que les aliments à broyer ou à hacher l'ont bien été, la vitesse du moteur croît selon la courbe caractéristique du moteur. Cette augmentation de vitesse à vide est particulièrement marquée pour certains types de moteurs tels que des moteurs universels.

Cette augmentation de vitesse se traduit inévitablement par une consommation électrique inutile, et la génération d'un bruit acoustique. Lorsque l'appareil est équipé d'un dispositif de réglage de la vitesse, l'utilisateur peut alors modifier la consigne de vitesse appliquée au moteur. On conçoit qu'il est souhaitable d'éliminer cette intervention de l'utilisateur pour assurer automatiquement ce réglage.

Des solutions ont déjà été proposées pour tenir compte des phénomènes de variation de couple résistant appliqué au moteur.

Ainsi, dans le document US 4 691 870, l'appareil décrit comporte un dispositif de commande qui assure automatiquement une stabilisation de la vitesse du moteur lorsque la charge, ou le couple résistant appliqué au moteur fluctue légèrement. Des systèmes de compensation permettent de maintenir la vitesse du moteur au niveau de la consigne fixée, malgré les variations de couple. Toutefois, ce système maintient un niveau de vitesse important même lorsque la charge a disparu, générant donc les inconvénients de consommation et de bruit déjà évoqués. Ce document divulgue une régulation traditionnelle dans laquelle la vitesse de fonctionnement de l'appareil tend à rester constante lorsque la charge diminue ou augmente. La vitesse de fonctionnement de l'appareil ne diminue pas ou n'augmente pas de façon pérenne.

Le document EP 0 480 309 décrit une autre solution qui a été proposée pour limiter les bruits acoustiques générés dans les appareils du type robots de cuisine. Un tel dispositif comprend des moyens permettant de limiter la vitesse du moteur à une vitesse maximum d'utilisation. Toutefois, cette vitesse n'est pas adaptée en fonction de la charge appliquée au moteur, et le bruit acoustique reste donc élevé à charge réduite.

Par ailleurs, le document JP 11-225891 décrit un mixeur qui arrête automatiquement le malaxage dès que les aliments ont atteint un niveau de broyage suffisant. Ce dispositif comprend donc des moyens pour détecter l'état de la matière dans le bol de mixage, et arrête le moteur de l'appareil lorsque le degré de malaxage est considéré comme suffisant. Ce degré de malaxage peut être estimé de différentes manières, et notamment par l'analyse d'un signal lumineux traversant la matière contenue dans le bol, ou bien encore par la mesure du courant alimentant le moteur. Un inconvénient de ce type de dispositif est qu'il est adapté uniquement aux opérations ponctuelles, puisque le moteur est arrêté après chaque opération. Il est donc nécessaire à l'utilisateur de remettre en marche le moteur par une action sur l'appareil.

On conçoit donc que ce type de dispositif n'est pas adapté pour les tâches dans lesquelles les aliments sont amenés dans l'appareil en plusieurs fois, et de manière discontinue, par exemple lorsqu'il s'agit de râper des légumes ou du fromage.

Un problème que cherche à résoudre l'invention est celui de la consommation électrique excessive, et la génération intempestive de bruits acoustiques lorsque l'appareil fonctionne quasiment "à vide", c'est-à-dire sous très faible charge ou charge nulle.

Un autre objectif de l'invention est de permettre d'enchaîner la réalisation d'opérations discontinues, sans nécessiter d'intervention de la part de l'utilisateur.

### Exposé de l'invention

L'invention concerne donc un appareil électroménager de préparation d'aliments. De façon connue, cet appareil comporte un moteur électrique apte à entraîner un outil rotatif à vitesse variable et un dispositif de contrôle/commande comprenant des moyens pour faire fonctionner le moteur selon au moins un premier mode de fonctionnement et un deuxième mode de fonctionnement.

Cet appareil inclut également des moyens pour évaluer la charge ou le couple résistant appliqué au moteur, ainsi que des moyens pour faire basculer automatiquement le fonctionnement de l'appareil du premier mode de fonctionnement au deuxième mode de fonctionnement lorsque ladite charge passe en dessous d'un premier seuil prédéterminé, et dans lequel, lorsque la charge passe d'une valeur supérieure au premier seuil à une valeur inférieure au premier seuil, la vitesse de fonctionnement de l'appareil diminue de façon pérenne.

Conformément à l'invention, cet appareil se caractérise en ce que lorsque la charge passe d'une valeur supérieure au premier seuil à une valeur inférieure au premier seuil, la vitesse de fonctionnement de l'appareil diminue de manière pérenne jusqu'à une valeur non nulle, et en ce que, le dispositif de contrôle/commande comporte également des moyens pour faire basculer automatiquement le fonctionnement de l'appareil du deuxième mode de fonctionnement au premier mode de fonctionnement lorsque ladite charge repasse en dessus d'un second seuil prédéterminé, et en ce que, lorsque la charge passe d'une valeur inférieure au second seuil à une valeur supérieure au second seuil, la vitesse de fonctionnement de l'appareil augmente de manière pérenne.

Autrement dit, l'invention consiste à assurer une surveillance de la charge appliquée au moteur. Ceci permet non seulement de réduire automatiquement la vitesse de ce dernier lorsqu'il n'est plus nécessaire d'exercer un couple important, mais également de remonter la vitesse dès lors que l'on détecte à nouveau la présence d'aliments à traiter.

En d'autres termes, le système est capable de se mettre automatiquement "en veille" (deuxième mode de fonctionnement), en réduisant la vitesse automatiquement dans le cas d'une marche à vide de l'outil, tout en restant prêt à fournir une vitesse plus importante (premier mode de fonctionnement) Lorsque cela redevient nécessaire. Cette gestion se fait de manière totalement automatique sans que l'utilisateur n'ait une quelconque action à effectuer.

La vitesse du moteur, et donc sa consommation électrique, est ainsi optimisée. De même, on évite une génération intempestive de bruits acoustiques dans les phases où le moteur tourne à vide.

Grâce à la réduction de la vitesse du moteur à une valeur non nulle lorsque la charge passe en dessous du premier seuil prédéterminé, la détection d'une augmentation de charge sur l'outil au-dessus du second seuil prédéterminé est facilitée ; de plus, cette disposition permet également de signaler à l'utilisateur que l'appareil est en état de veille et non à l'arrêt.

Avantageusement, lorsque la charge passe d'une valeur supérieure au premier seuil à une valeur inférieure au premier seuil, la vitesse de fonctionnement de l'appareil diminue d'au moins 5% ; et lorsque la charge passe d'une valeur inférieure au second seuil à une valeur supérieure au second seuil, la vitesse de fonctionnement de l'appareil augmente d'au moins 5%.

Le premier mode de fonctionnement peut-être défini par une première vitesse de référence et le deuxième mode de fonctionnement peut-être défini par une deuxième vitesse de référence.

La vitesse appliquée au moteur peut être définie par une consigne de vitesse, lorsque l'appareil comporte un capteur de vitesse associé à un dispositif de régulation. Les moyens pour augmenter ou diminuer la vitesse peuvent consister en une modification de la consigne de vitesse du moteur.

La vitesse appliquée au moteur peut aussi dépendre de la caractéristique de la courbe couple/vitesse du moteur, lorsque le moteur n'est pas régulé en vitesse. Dans ce dernier cas, la vitesse dépend de la charge du moteur. Notamment, avec les moteurs universels, la tension d'alimentation du moteur permet de définir la caractéristique de la courbe couple/vitesse du moteur. Les moyens pour augmenter ou diminuer la vitesse peuvent consister en des moyens pour modifier la tension d'alimentation du moteur.

En pratique, le seuil de couple résistant provoquant la réduction de vitesse peut être identique, à une hystérésis près, au seuil à partir duquel la vitesse nominale du moteur est automatiquement rétablie. Toutefois, ces deux seuils peuvent également être différents.

Avantageusement en pratique, ces seuils prédéterminés de charge, pour la réduction et/ou l'augmentation automatique de la vitesse du moteur, peuvent également être variables, et dépendre de la valeur de la vitesse initiale. Autrement dit, le seuil de couple résistant générant la mise en veille peut ne pas être le même selon que la vitesse nominale est importante ou non.

Cette caractéristique permet de s'adapter à différents types de fonctionnement, par exemple dédiés au traitement de différents types d'aliments avec un même appareil.

même, il peut également être intéressant que la valeur de la vitesse après réduction soit fonction de la valeur de la charge mesurée.

Autrement dit, plus le couple résistant mesuré ou estimé est bas, plus la vitesse du moteur sera réduite.

Avantageusement en pratique, l'appareil peut être agencé pour diminuer supplémentairement la vitesse lorsque la charge reste en dessous du seuil prédéterminé pour cette mise en veille, pendant une durée prédéterminée. Autrement dit, la vitesse peut être encore réduite, voire même annulée, lorsque l'état de mise en veille perdure, signifiant que les opérations sur les aliments sont terminées.

En pratique, les moyens pour détecter la charge appliquée au moteur peuvent être très variés. Le couple peut ainsi être mesuré par un capteur de force prévu à cet effet, ou bien encore par des mesures de paramètres électriques propres au moteur, tel que le courant consommé par le moteur ou la tension à ses bornes. Il est également possible de détecter une variation de charge par une mesure de l'écart entre une vitesse de consigne et une vitesse mesurée, ou bien encore par une mesure du bruit acoustique.

Les fluctuations de charge sont également un moyen de savoir que l'outil travaille. Il est possible de tenir compte des fluctuations de charge dans l'estimation du couple. Ainsi le couple estimé peut être majoré si la charge fluctue. De manière équivalente, une fluctuation de charge peut être prise en compte par une majoration du seuil de couple.

La vitesse du moteur est réduite à une valeur non nulle lorsque la charge passe en dessous du premier seuil prédéterminé. Cette disposition permet de faciliter la détection d'une augmentation de charge sur l'outil au-dessus du second seuil prédéterminé. Cette disposition permet également de signaler à l'utilisateur que l'appareil est en état de veille. En alternative, si le moteur ne tourne plus lorsque l'appareil est à l'état de veille, un dispositif indicateur pourrait être envisagé, notamment un dispositif indicateur lumineux.

Avantageusement, la vitesse du moteur est réduite d'au moins 15% lorsque la charge passe en dessous du premier seuil prédéterminé. La vitesse de référence est la vitesse de fonctionnement du moteur pour ladite charge en l'absence du dispositif selon l'invention, et non la vitesse du moteur en présence d'une charge supérieure au premier seuil prédéterminé. Cette disposition permet d'obtenir une diminution significative du bruit de l'appareil.

Avantageusement encore, la vitesse du moteur est réduite d'au moins 30% lorsque la charge passe en dessous du premier seuil prédéterminé. Cette disposition permet d'obtenir une diminution encore plus importante du bruit de l'appareil.

La présente invention est particulièrement avantageuse dans le cas d'un moteur universel, car elle permet d'éviter une augmentation excessive de la vitesse lorsque la charge appliquée a diminué de manière importante et que le moteur n'est pas contrôlé en vitesse.

### Description sommaire des figures

La manière de réaliser l'invention ainsi que les avantages qui en découlent ressortiront bien de la description du mode de réalisation qui suit et de sa variante, à l'appui des figures annexées, dans lesquelles :
La figure 1 est une vue en perspective sommaire d'un exemple de robot culinaire.
La figure 2 est un schéma illustrant un dispositif de contrôle/commande de l'appareil de la figure 1.
La figure 3 est un ensemble de chronogrammes illustrant la variation d'une consigne de vitesse, en fonction de la charge appliquée au moteur, pour un appareil comportant un dispositif de contrôle/ commande tel qu'illustré à la figure 2.
La figure 4 est un schéma illustrant une variante du dispositif de commande de l'appareil de la figure 1.
La figure 5 est un ensemble de chronogrammes illustrant la variation de la vitesse en fonction de la charge appliquée au moteur, pour un appareil comportant un dispositif de contrôle/commande tel qu'illustré à la figure 4.

### Manière de réaliser l'invention

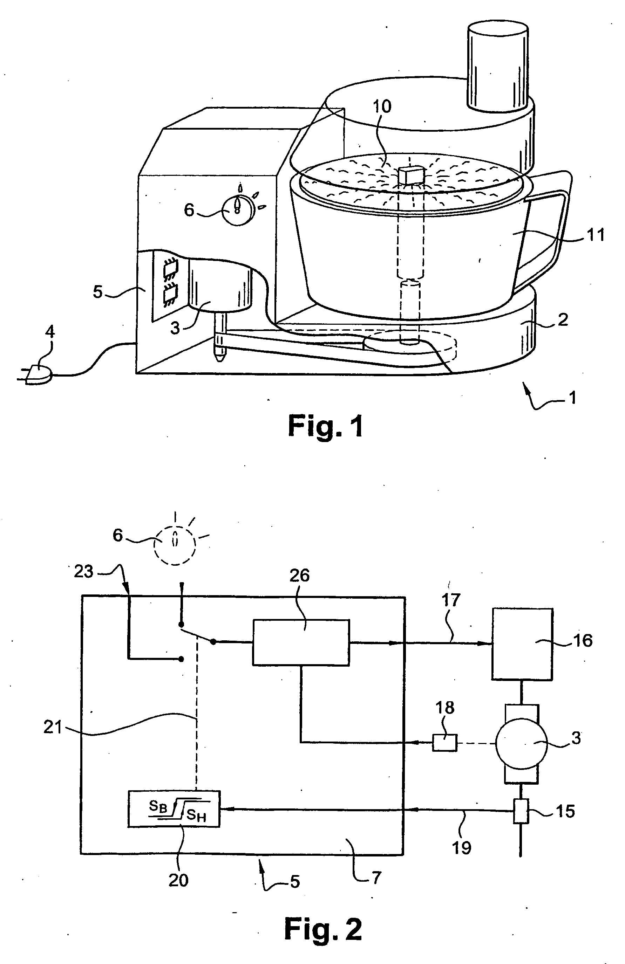

Comme déjà évoqué, l'invention trouve une application dans de multiples appareils électroménagers destinés au traitement des aliments, parmi lesquels comme illustré à la figure 1, un robot culinaire (1). Un tel robot (1) comprend de manière classique un châssis (2) incorporant un moteur électrique (3) alimenté à partir de la tension réseau (4), ou d'une source d'alimentation autonome. Sa commande se fait au moyen d'un dispositif de contrôle/commande (5) électronique ou électromécanique.

Dans la forme illustrée, le robot (1) est équipé d'un sélecteur de vitesse (6) permettant à l'utilisateur de faire varier la vitesse appliquée au moteur (3). Toutefois, l'invention couvre également les appareils dans lesquels l'utilisateur ne peut sélectionner la vitesse.

Le moteur électrique (3) entraîne en rotation un outil (10) qui dans la forme illustrée est un disque portant une râpe à fromage, disposé en partie supérieure d'un bol (11). La transmission mécanique entre le moteur électrique (3) et l'outil (10) peut se faire de manières diverses, sans incidence sur le principe de l'invention.

Selon une caractéristique de l'invention, le dispositif de contrôle/commande (5) permet d'assurer une variation de la vitesse appliquée au moteur électrique (3), en fonction d'une estimation ou d'une mesure du couple résistant appliqué à ce moteur.

Dans la forme illustrée, à la figure 2, le couple résistant peut être estimé par la mesure du courant circulant dans le moteur électrique (3), par l'intermédiaire d'un capteur (15) du type Shunt, à effet Hall ou autre. Toutefois, comme déjà évoqué, ce couple résistant peut être également évalué de manière différente, par des mesures de tension aux bornes du monteur électrique (3) ou directement par l'intermédiaire d'un capteur de force.

Le moteur électrique (3) est alimenté par l'intermédiaire d'un circuit de puissance (16) qui peut par exemple être une commande à découpage de phase à base de triac ou de thyristor ou de diode, ou une commande du type hacheur intégrant des interrupteurs statiques à base d'IGBT ou autres transistors ou thyristors de puissance, associés de façon classique à des diodes de roue libre.

La vitesse du moteur est commandée par la délivrance d'ordres de commande (17) à ces interrupteurs statiques, les ordres étant élaborés au niveau d'une carte électronique (7) du dispositif de contrôle/commande (5), illustrée à la figure 2. La régulation de cette vitesse en fonction de la consigne de vitesse appliquée peut se faire de différentes manières, et notamment par des contrôleurs PID.

Le capteur de vitesse (18) du moteur peut être constitué par une fourche optique qui réagit au passage des dents d'une roue dentée montée sur l'axe du moteur électrique (3), mais bien entendu tout autre type de capteur de vitesse peut être employé sans sortir du cadre de l'invention. Dans certains cas, le robot peut ne pas comporter de capteur de vitesse, de sorte que la vitesse n'est pas mesurée directement, mais seulement estimée. Le robot peut également être dépourvu de contrôle de vitesse, la vitesse appliquée dépendant de la caractéristique de la courbe couple/vitesse du moteur et de la charge appliquée.

Conformément à l'invention, la vitesse peut adopter des valeurs différentes selon la charge estimée. Ainsi, dans la forme illustrée à la figure 2, l'information du courant (19) circulant dans le moteur électrique (3), représentative du couple résistant appliqué au moteur, est traitée par un étage (20) analysant ladite charge, afin de délivrer un signal (21) commandant le basculement de la consigne appliquée entre deux valeurs.

Dans la forme illustrée, la consigne nominale de vitesse est élaborée par le sélecteur de vitesse (6) accessible par l'utilisateur. L'autre consigne de vitesse (23) peut être soit préprogrammée au niveau de la carte électronique, soit fixée avec éventuellement une possibilité de réglage ou d'adaptation dynamique en fonction de la consigne nominale de vitesse.

Dans la forme illustrée, le basculement entre les deux consignes de vitesse correspondant à deux modes de fonctionnement, se fait en comparant la charge estimée avec deux seuils haut et bas (S_{B}, S_{H}), en fonction du sens de variation de la charge (19).

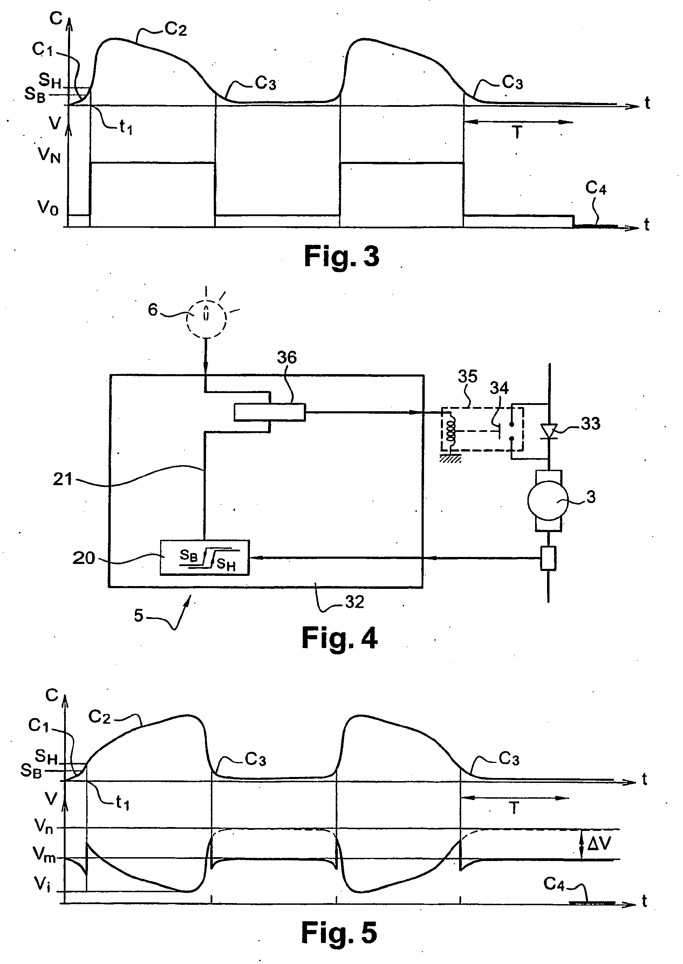

Comme illustré à la figure 3, après que l'utilisateur a allumé l'appareil, et réglé la vitesse de rotation nominale au moyen du sélecteur de vitesse (6), le dispositif de contrôle/commande (5) détecte que le couple résistant (C₁) appliqué au moteur est faible, et inférieur au seuil haut (S_{H}). De la sorte, la consigne de vitesse appliquée au moteur est la valeur basse (Vₒ). L'appareil se trouve dans un mode de "veille", c'est-à-dire selon le deuxième mode de fonctionnement.

Dès lors que l'utilisateur va mettre au contact de charge un aliment du type morceau de fromage (t₁), le couple résistant (C₂) appliqué au moteur augmente, et le dispositif de contrôle/commande (5) provoque le basculement de la consigne de vitesse de valeur nominale (V_{N}), c'est-à-dire selon le premier mode de fonctionnement. Le couple (C₂) fourni par le moteur s'élève pour effectuer l'effort mécanique de découpe du morceau de fromage.

Lorsque l'intégralité du morceau de fromage a été râpée, le couple résistant (C₃) appliqué au moteur diminue, pour passer en dessous d'une valeur basse (S_{B}). A ce moment, éventuellement après une temporisation, le dispositif de contrôle/commande (5) provoque le passage de la consigne de vitesse à la valeur basse (Vₒ), correspondant à un mode de mise en veille, c'est-à-dire selon le deuxième mode de fonctionnement.

La vitesse peut ensuite augmenter lorsqu'un nouveau morceau de fromage est introduit dans l'appareil.

Comme illustré à la figure 3, si l'appareil se trouve dans un mode veille pendant un temps (T) suffisamment important, le contrôleur de vitesse (26) peut provoquer une diminution supplémentaire, voire un arrêt du moteur.

Il est également possible à l'utilisateur de forcer une sortie du mode veille, sans générer une augmentation du couple résistant, mais en agissant sur une commande à sa disposition au niveau des différents sélecteurs de l'appareil.

L'invention couvre également des circuits d'alimentation du moteur plus économiques, dans lesquels une diode (33) est disposée en série avec le moteur électrique (3) tel que par exemple un moteur universel, comme illustré à la figure 4. Dans ce cas, cette diode (33) peut être court-circuitée par un contact (34) de relais (35) commandé de façon appropriée.

Lorsque la diode (33) est court-circuitée (ou shuntée), la pleine tension est appliquée au moteur (3), qui tourne alors à sa vitesse maximale pour une charge donnée.

Lorsque le contact (34) du relais (35) est ouvert, la diode (33) se trouve en série avec le moteur électrique (3), de sorte que la chute de tension à ses bornes diminue la tension appliquée au moteur. Ce dernier tourne alors à une vitesse moindre pour ladite charge donnée.

La commande du relais (35) est réalisée par un étage (36) de la carte électronique (32) qui combine l'information en provenance du sélecteur de vitesse (6) (s'il existe), et le signal (21) de comparaison du couple résistant vis à vis du seuil prédéterminé; élaboré par l'étage (20) du dispositif de contrôle/commande (5).

Ainsi il est possible, lorsque la charge appliquée à l'outil a diminué du fait de la fin du traitement des aliments, d'éviter une montée en vitesse excessive d'un moteur électrique non piloté par un capteur de vitesse.

Comme illustré à la figure 5, après que l'utilisateur a allumé l'appareil, le dispositif de contrôle/commande détecte que le couple résistant (C₁) appliqué au moteur est faible, et inférieur au seuil haut (S_{H}). De la sorte, le moteur est alimenté avec une tension réduite. L'appareil se trouve dans un mode de "veille", selon le deuxième mode de fonctionnement.

Dès lors que l'utilisateur va mettre au contact de charge un aliment du type morceau de fromage (t₁), le couple résistant appliqué au moteur augmente. La vitesse du moteur commence à diminuer, du fait que le moteur n'est pas contrôlé en vitesse. Lorsque le couple résistant atteint le seuil haut (S_{H}), le dispositif de contrôle/commande (5) provoque le basculement de l'alimentation du moteur. La diode (33) est shuntée et le moteur (3) est alimenté à pleine tension. La vitesse du moteur augmente, puis diminue sous l'effet de l'augmentation de la charge due à l'effort mécanique de découpe du morceau de fromage.

Lorsque l'intégralité du morceau de fromage a été râpée, le couple résistant (C₃) appliqué au moteur diminue, pour passer en dessous d'une valeur basse (S_{B}). A ce moment, éventuellement après une temporisation, le dispositif de contrôle/commande (5) provoque le basculement de l'alimentation du moteur vers le premier mode de fonctionnement. La diode (33) est en série avec le moteur (3). Le moteur est alimenté avec une tension réduite. L'appareil a retrouvé le mode de "veille".

Le moteur peut être à nouveau alimenté à pleine tension lorsqu'un nouveau morceau de fromage est introduit dans l'appareil.

Tel qu'illustré à la figure 5, la vitesse Vₘ atteinte en l'absence de charge avec le dispositif selon l'invention peut être supérieure à la vitesse minimale Vᵢ atteinte sous charge. Toutefois la vitesse Vₘ atteinte en l'absence de charge avec le dispositif selon l'invention est inférieure à la vitesse Vₙ atteinte en l'absence de charge sans le dispositif selon l'invention. L'écart de vitesse ΔV entre la vitesse Vₘ et la vitesse Vₙ permet de réduire le bruit généré par l'appareil tournant en l'absence de charge.

En pratique, une réduction de 15% environ de la vitesse permet de réduire l'émission sonore d'environ 3 décibels. Ainsi, de façon chiffrée, le moteur peut passer d'une vitesse à vide de 10500 tours par minute (tr/min) à 8800 tr/min, pour une diminution de bruit de 50%. Une diminution supplémentaire de 15%, portant donc la vitesse à vide à 70% de la vitesse maximale permet de réduire encore le volume de l'émission sonore.

Ainsi, l'appareil électroménager de préparation d'aliments (1), comporte un moteur électrique (3) apte à entraîner un outil rotatif (10) à vitesses variable, un dispositif de contrôle/commande (5) comprenant des moyens pour faire fonctionner le moteur selon au moins un premier mode de fonctionnement et un deuxième mode de fonctionnement.

Cet appareil inclut également des moyens pour évaluer la charge ou le couple résistant (C₁, C₂, C₃) appliqué au moteur, ainsi que des moyens pour faire basculer automatiquement le fonctionnement de l'appareil du premier mode de fonctionnement au deuxième mode de fonctionnement lorsque ladite charge passe en dessous d'un premier seuil (S_{B}) prédéterminé.

Selon l'invention, cet appareil se caractérise en ce que le dispositif de contrôle/commande (5) comporte également des moyens pour faire basculer automatiquement le fonctionnement de l'appareil du deuxième mode de fonctionnement au premier mode de fonctionnement lorsque ladite charge repasse en dessus d'un second seuil prédéterminé (S_{H}).

Aussi, lorsque l'appareil passe du premier mode de fonctionnement dit «actif» au deuxième mode de fonctionnement dit «en veille» , la vitesse de fonctionnement diminue de manière pérenne ; et lorsque l'appareil passe du deuxième mode de fonctionnement au premier mode de fonctionnement, la vitesse de fonctionnement de l'appareil augmente de manière pérenne.

L'expression « diminution de manière pérenne » se rapportant à la vitesse de fonctionnement signifie que si la charge se stabilise en deçà du premier seuil (S_{B}), la réduction de vitesse persiste par rapport à une charge supérieure au premier seuil (S_{B}).

L'expression «augmentation de manière pérenne » se rapportant à la vitesse de fonctionnement signifie que si la charge se stabilise au-delà du second seuil (S_{H}), l'augmentation de vitesse persiste par rapport à une charge inférieure au second seuil (S_{H}).

Toutefois, cette diminution ou cette augmentation peut n'intervenir que localement. En d'autres termes, la vitesse de fonctionnement à vide du deuxième mode peut être supérieure à la vitesse de fonctionnement pour une charge supérieure au seuil (S_{B}) du premier mode.

De préférence, lorsque la charge passe d'une valeur supérieure au premier seuil (S_{B}) à une valeur inférieure au premier seuil (S_{B}), la vitesse de fonctionnement de l'appareil diminue d'au moins 5% ; et lorsque la charge passe d'une valeur inférieure au second seuil (S_{H}) à une valeur supérieure au second seuil (S_{H}), la vitesse de fonctionnement de l'appareil augmente d'au moins 5%.

Bien entendu, l'estimation du couple résistant appliqué au moteur peut se faire en combinant les différents paramètres évoqués ci-dessus, de mesure des paramètres électriques, mécaniques ou acoustiques du moteur, et éventuellement de leur variation dans le temps.

Il ressort de ce qui précède que l'appareil conforme à l'invention présente de multiples avantages, et notamment de réduire le bruit acoustique généré par l'appareil dans les phases où il n'est pas nécessaire de délivrer une puissance importante.

De même, la consommation électrique de l'appareil est réduite dans les phases de faible consommation mécanique. On notera que l'ensemble de ces avantages s'obtient de façon automatique, sans nécessiter de manipulation spécifique de l'utilisateur.

En outre, la gestion de ces modes de fonctionnement ne nécessite pas l'implantation de composants électrique ou électronique coûteux, notamment lorsque la régulation de vitesse s'effectue au moyen d'un microcontrôleur.

## Revendications

1. Appareil électroménager de préparation d'aliments (1), comportant un moteur électrique (3) apte à entraîner un outil rotatif (10) à vitesse variable, un dispositif de contrôle/commande (5) comprenant des moyens pour faire fonctionner le moteur selon au moins un premier mode de fonctionnement et un deuxième mode de fonctionnement, des moyens pour évaluer la charge ou le couple résistant (C₁, C₂, C₃) appliqué au moteur, et des moyens pour faire basculer automatiquement le fonctionnement de l'appareil du premier mode de fonctionnement au deuxième mode de fonctionnement lorsque ladite charge passe en dessous d'un premier seuil (S_{B}) prédéterminé, et dans lequel, lorsque la charge passe d'une valeur supérieure au premier seuil (S_{B}) à une valeur inférieure au premier seuil (S_{B}), la vitesse de fonctionnement de l'appareil diminue de manière pérenne,
**caractérisé en ce que** lorsque la charge passe d'une valeur supérieure au premier seuil (S_{B}) à une valeur inférieure au premier seuil (S_{B}), la vitesse de fonctionnement de l'appareil diminue de manière pérenne jusqu'à une valeur non nulle, et **en ce que**, le dispositif de contrôle/commande(5) comporte également des moyens pour faire basculer automatiquement le fonctionnement de l'appareil du deuxième mode de fonctionnement au premier mode de fonctionnement lorsque ladite charge repasse en dessus d'un second seuil prédéterminé (S_{H}), et **en ce que**, lorsque la charge passe d'une valeur inférieure au second seuil (S_{H}) à une valeur supérieure au second seuil (S_{H}), la vitesse de fonctionnement de l'appareil augmente de manière pérenne.

2. Appareil selon la revendication 1, **caractérisé en ce que**, lorsque la charge passe d'une valeur supérieure au premier seuil (S_{B}) à une valeur inférieure au premier seuil (S_{B}), la vitesse de fonctionnement de l'appareil diminue d'au moins 5%.

3. Appareil selon la revendication 1 ou selon la revendication 2 , **caractérisé en ce que**, lorsque la charge passe d'une valeur inférieure au second seuil (S_{H}) à une valeur supérieure au second seuil (S_{H}), la vitesse de fonctionnement de l'appareil augmente d'au moins 5%.

4. Appareil selon l'une des revendications 1 à 3, **caractérisé en ce que** les seuils prédéterminés de charge pour la réduction (S_{B}) et/ou l'augmentation (S_{H}) automatique de la vitesse du moteur, dépendent de la valeur de la vitesse initiale.

5. Appareil selon l'une des revendications 1 à 4, **caractérisé en ce que** les seuils prédéterminés (S_{B}, S_{H}) sont identiques pour la réduction et l'augmentation automatique de la vitesse.

6. Appareil selon l'une des revendications 1 à 5, **caractérisé en ce qu'**il comporte des moyens pour diminuer supplémentairement la vitesse lorsque la charge (C₃) reste en dessous du seuil prédéterminé pour la réduction de la vitesse pendant une durée prédéterminée.

7. Appareil selon l'une des revendications 1 à 6, **caractérisé en ce que** la valeur de la consigne de vitesse après réduction est fonction de la valeur de charge mesurée.

8. Appareil selon l'une des revendications 1 à 7, **caractérisé en ce que** les moyens pour détecter la charge appliquée au moteur incluent des moyens (15) pour mesurer le courant électrique consommé par le moteur, ou la tension aux bornes du moteur (3).

9. Appareil selon l'une des revendications 1 à 8, **caractérisé en ce que** les moyens pour détecter la charge applicable au moteur incluent des moyens de mesure du bruit acoustique généré par l'appareil.

10. Appareil selon l'une des revendications 1 à 9, **caractérisé en ce que** la vitesse du moteur est réduite d'au moins 15% lorsque la charge passe en dessous du premier seuil (S_{B}) prédéterminé.

11. Appareil selon l'une des revendications 1 à 10, **caractérisé en ce que** la vitesse du moteur est réduite d'au moins 30% lorsque la charge passe en dessous du premier seuil (S_{B}) prédéterminé.

12. Appareil selon l'une des revendications 1 à 11, **caractérisé en ce que** le moteur électrique (3) est un moteur universel.

## Claims

1. A household electrical appliance (1) for preparing food, said appliance including an electric motor (3) suitable for driving a rotary tool (10) at a variable speed, a monitoring/control device (5) comprising means for causing the motor to operate at least in a first operating mode and in a second operating mode, means for evaluating the load or resisting torque (C₁, C₂, C₃) applied to the motor, and means for causing operation of the appliance to switch over automatically from the first operating mode to the second operating mode when said load passes below a first predetermined threshold (S_{B}), and in which appliance, when the load passes from a value above the first threshold (S_{B}) to a value below the first threshold (S_{B}), the operating speed of the appliance decreases lastingly;
said household electrical appliance for preparing food being **characterized in that**, when the load passes from a value above the first threshold (S_{B}) to a value below the first threshold (S_{B}), the operating speed of the appliance decreases lastingly to a non-zero value, and **in that** the monitoring/control device (5) further comprises means for causing operation of the appliance to switch over automatically from the second operating mode to the first operating mode when said load passes back above a second predetermined threshold (S_{H}), and **in that**, when the load passes from a value below the second threshold (S_{H}) to a value above the second threshold (S_{H}), the operating speed of the appliance increases lastingly.

2. An appliance according to claim 1, **characterized in that**, when the load passes from a value above the first threshold (S_{B}) to a value below the first threshold (S_{B}), the operating speed of the appliance decreases by at least 5%.

3. An appliance according to claim 1 or claim 2, **characterized in that**, when the load passes from a value below the second threshold (S_{H}) to a value above the second threshold (S_{H}), the operating speed of the appliance increases by at least 5%.

4. An appliance according to any one of claims 1 to 3, **characterized in that** the predetermined load thresholds for automatically decreasing (S_{B}) and/or increasing (S_{H}) the speed of the motor depend on the value of the initial speed.

5. An appliance according to any one of claims 1 to 4, **characterized in that** the predetermined thresholds (S_{B}, S_{H}) are identical for automatically reducing and for automatically increasing the speed.

6. An appliance according to any one of claims 1 to 5, **characterized in that** it includes means for further reducing the speed when the load (C₃) remains above the predetermined speed-reduction threshold for a predetermined length of time.

7. An appliance according to any one of claims 1 to 6, **characterized in that** the value of the speed setpoint after speed reduction is a function of the measured load.

8. An appliance according to any one of claims 1 to 7, **characterized in that** the means for detecting the load applied to the motor include means (15) for measuring the electric current drawn by the motor, or the voltage across the terminals of the motor (3).

9. An appliance according to any one of claims 1 to 8, **characterized in that** the means for detecting the load applicable to the motor include means for measuring the acoustic noise generated by the appliance.

10. An appliance according to any one of claims 1 to 9, **characterized in that** the speed of the motor is reduced by at least 15% when the load passes below the first predetermined threshold (S_{B}).

11. An appliance according to any one of claims 1 to 10, **characterized in that** the speed of the motor is reduced by at least 30% when the load passes below the first predetermined threshold (S_{B}).

12. An appliance according to any one of claims 1 to 11, **characterized in that** the electric motor (3) is a universal motor.

## Patentansprüche

1. Elektrohaushaltsgerät zur Nahrungsmittelzubereitung (1), mit einem Elektromotor (3), der ein drehbares Werkzeug (10) mit variabler Drehzahl antreiben kann, mit einer Vorrichtung zur Kontrolle/Steuerung (5), die Mittel aufweist, um den Motor gemäß mindestens einem ersten Betriebsmodus und einem zweiten Betriebmodus zu betreiben, mit Mitteln zur Berechnung der Last öder des Widerstandsmoments (C₁, C₂, C₃), die/das auf den Motor aufgebracht wird, und mit Mitteln, die dazu dienen, den Betrieb des Geräts automatisch vom ersten Betriebsmodus in den zweiten Betriebsmodus wechseln zu lassen, wenn die Last einen ersten vorbestimmten Schwellenwert (S_{B}) unterschreitet, und bei dem sich die Betriebsdrehzahl des Geräts stetig verringert, wenn die Last von einem Wert, der über dem ersten Schwellenwert (S_{B}) liegt, in einen Wert übergeht, der unter dem ersten Schwellenwert (S_{B}) liegt,
**dadurch gekennzeichnet, dass** sich die Betriebsdrehzahl des Geräts stetig bis auf einen von Null abweichenden Wert verringert, wenn die Last von einem Wert, der über dem ersten Schwellenwert (S_{B}) liegt, in einen Wert übergeht, der unter dem ersten Schwellenwert (S_{B}) liegt, dass die Vorrichtung zur Kontrolle/Steuerung (5) auch Mittel aufweist, die dazu dienen, den Betrieb des Geräts automatisch vom zweiten Betriebsmodus in den ersten Betriebsmodus wechseln zu lassen, wenn die Last wieder über einem zweiten vorbestimmten Schwellenwert (S_{H}) liegt, und dass die Betriebsdrehzahl des Geräts stetig steigt, wenn die Last von einem Wert, der unter dem zweiten Schwellenwert (S_{H}) liegt, in einen Wert übergeht, der über dem zweiten Schwellenwert (S_{H}) liegt.

2. Gerät nach Anspruch 1, **dadurch gekennzeichnet, dass** sich die Betriebsdrehzahl des Geräts um mindestens 5% verringert, wenn die Last von einem Wert, der über dem ersten Schwellenwert (S_{B}) liegt, in einem Wert übergeht, der unter dem ersten Schwellenwert (S_{B}) liegt.

3. Gerät nach Anspruch 1 oder Anspruch 2, **dadurch gekennzeichnet, dass** die Betriebsdrehzahl um mindestens 5% steigt, wenn die Last von einem Wert, der unter dem zweiten Schwellenwert (S_{H}) liegt, in einen Wert übergeht, der über dem zweiten Schwellenwert (S_{H}) liegt.

4. Gerät nach einem der Ansprüche 1 bis 3, **dadurch gekennzeichnet, dass** die vorbestimmten Schwellenwerte der Last für die automatische Verringerung (S_{B}) und/oder Erhöhung (S_{H}) der Motordrehzahl vom Wert der ursprünglichen Drehzahl abhängig sind.

5. Gerät nach einem der Ansprüche 1 bis 4, **dadurch gekennzeichnet, dass** die vorbestimmten Schwellenwerte (S_{B}, S_{H}) für die automatische Verringerung und Erhöhung der Drehzahl identisch sind.

6. Gerät nach einem der Ansprüche 1 bis 5, **dadurch gekennzeichnet, dass** es Mittel aufweist, um die Drehzahl zusätzlich zu verringern, wenn die Last (C₃) für eine vorbestimmte Dauer unter dem vorbestimmten Schwellenwert für die Verringerung der Drehzahl bleibt.

7. Gerät nach einem der Ansprüche 1 bis 6, **dadurch gekennzeichnet, dass** der Sollwert der Drehzahl nach der Verringerung vom gemessenen Wert der Last abhängig ist.

8. Gerät nach einem der Ansprüche 1 bis 7, **dadurch gekennzeichnet, dass** die Mittel zur Erfassung der auf den Motor aufgebrachten Last Mittel (15) zur Messung des vom Motor verbrauchten elektrischen Stroms oder der Spannung an den Anschlussklemmen des Motors (3) umfassen.

9. Gerät nach einem der Ansprüche 1 bis 8, **dadurch gekennzeichnet, dass** die Mittel zur Erfassung der Last, die auf den Motor aufgebracht werden kann, Mittel zur Messung des vom Gerät erzeugten akustischen Schalls umfassen.

10. Gerät nach einem der Ansprüche 1 bis 9, **dadurch gekennzeichnet, dass** sich die Motordrehzahl um mindestens 15% verringert, wenn die Last den ersten vorbestimmten Schwellenwert (S_{B}) unterschreitet.

11. Gerät nach einem der Ansprüche 1 bis 10, **dadurch gekennzeichnet, dass** sich die Motordrehzahl um mindestens 30% verringert, wenn die Last den ersten vorbestimmten Schwellenwert (S_{B}) unterschreitet.

12. Gerät nach einem der Ansprüche 1 bis 11, **dadurch gekennzeichnet, dass** der Elektromotor (3) ein Universalmotor ist.
